# FASCICULE DE BREVET EUROPEEN

(11) **EP 1 613 556 B1**
(45) Date de publication et mention de la délivrance du brevet: **17.10.2007**
(21) Numéro de dépôt: 03816677.3
(22) Date de dépôt: 16.04.2003
(51) Int. Cl.: C02F 1/24, B01D 21/00, B03D 1/14, B01D 21/24

(54) **INSTALLATION DE TRAITEMENT D'EAUX PAR FLOTTATION**
ANLAGE ZUR BEHANDLUNG VON WASSER MITTELS FLOTATION
INSTALLATION FOR TREATING WATER BY FLOTATION

(43) Date de publication de la demande: 11.01.2006
(73) Titulaire: ONDEO DEGREMONT, 92500 Rueil-Malmaison (FR)
(72) Inventeur: BEAULE, Christian, Montréal, Québec H2B 2J3 (CA); MARCHAND, Jean, Laval, Québec H7X 2G2 (CA); BOSISIO, Marco, Pierrefonds, Québec H9H 1X3 (CA)
(74) Mandataire: Michardière, Bernard
(86) Numéro de dépôt international: PCT/FR2003/001224
(87) Numéro de publication internationale: WO 2004/094318

(56) Documents cités:
- EP-A- 0 286 707
- WO-A-01/60494
- US-A- 5 120 435
- US-A- 5 296 149
- US-A- 5 662 804
- LUNDH M ET AL: "The influence of contact zone configuration on the flow structure in a dissolved air flotation pilot plant" WATER RESEARCH, ELSEVIER SCIENCE PUBLISHERS, AMSTERDAM, NL, vol. 36, no. 6, mars 2002 (2002-03), pages 1585-1595, XP004343025 ISSN: 0043-1354

## Description

La présente invention concerne une installation de traitement d'eaux comportant une cellule de flottation dans laquelle est admise l'eau brute, préalablement floculée puis mélangée à de l'eau pressurisée et détendue de façon que les matières en suspension contenues dans l'eau brute soient entraînées par les micro-bulles résultant de ladite détente et évacuées à la surface du liquide contenu dans la cellule, l'eau traitée étant évacuée par le fond de ladite cellule.

On connaît (EP-A 0 659 690) une installation du type mentionné ci-dessus qui comporte une zone de floculation, une zone de mélange de l'eau brute floculée, dans un courant ascendant, avec de l'eau pressurisée délivrée par un système de pressurisation-détente, et une zone de flottation à la partie supérieure de laquelle sont évacuées les matières en suspension contenues dans l'eau brute et amenées à la surface par les micro-bulles, cette zone de flottation étant munie, à sa partie inférieure d'un dispositif de reprise perforé (par exemple, plancher intermédiaire avec ou sans buselures, collecteurs, etc) de manière que toute la surface de la zone de flottation présente un flux d'écoulement uniforme et identique du liquide clarifié.

Dans cet état antérieur de l'art, les perforations prévues dans le dispositif de reprise, présentent des dimensions plus petites à l'extrémité finale de la zone de flottation (c'est-à-dire à l'extrémité par laquelle s'effectue la sortie du liquide clarifié), qu'à l'extrémité initiale (par laquelle est introduite l'eau brute à traiter) ou les intervalles séparant les perforations augmentent de l'extrémité initiale vers l'extrémité finale. Grâce à cette répartition hétérogène des perforations, qui réalise une dissymétrie au niveau du dispositif de reprise, la résistance au flux produite par ce dispositif de reprise de la zone de flottation est plus importante à l'extrémité finale de cette zone qu'à son extrémité initiale et la résistance au flux décroît vers l'extrémité initiale de ladite zone. Ainsi, toute la surface de la zone de flottation est traversée par un flux identique et uniforme de l'eau à traiter.

Une caractéristique de ce type d'installation réside dans la formation d'un lit épais de micro-bulles grâce auquel la floculation s'effectue en deux stades, tout d'abord dans la zone de floculation puis, dans la zone de flottation, au sein du lit de micro-bulles, grâce à la masse de contact importante due aux micro-bulles assurant, par ailleurs, la séparation par flottation des matières en suspension. On réalise ainsi ce qu'il est convenu d'appeler une floculation turbulente : le lit de bulles permet i) d'accroître la vitesse de traitement et ii) d'améliorer la floculation et le captage des particules floculées.

Dans ces installations selon l'état antérieur de l'art et lorsque la vitesse de traitement est élevée ou lorsque l'eau brute à traiter est très froide, la mise en oeuvre d'une cellule de flottation selon EP-A-0-659-690 conduit à l'entraînement de bulles dans l'eau traitée. A très grande vitesse, la présence de ces bulles contribue à une augmentation de turbidité à la sortie de la cellule de flottation. A cet inconvénient s'ajoute celui résultant de la présence d'une grande quantité de bulles à la sortie de la cellule de flottation, qui peut entraîner une diminution du rendement d'un filtre situé en aval(par exemple à sable/anthracite) lorsque l'installation est destinée à la production d'eau potable.

La présente invention s'est fixée pour objectif de perfectionner les installations de traitement d'eaux par flottation selon l'état antérieur de la technique mentionné ci-dessus, en vue de résoudre les problèmes relatifs aux traitements d'eaux à grande vitesse et/ou à très basse température.

En conséquence, la présente invention a pour objet une installation de traitement d'eaux par flottation comportant un équipement de flottation constitué d'une cellule de flottation dans laquelle est amenée de l'eau brute floculée et mélangée avec des micro-bulles produites par un système de pressurisation-détente, cette cellule étant munie d'un dispositif de reprise perforé, conçu de façon que la surface de la cellule de flottation soit traversée par un flux identique et uniforme de l'eau à traiter, cette installation étant caractérisée en ce qu'elle comporte des modules de capture (du type « module lamellaire » ou « modules de transfert », à flux hydrauliques parallèles ou croisés) disposés dans la cellule de flottation de manière que leur partie inférieure soit située à une distance du dispositif de reprise perforé, cette distance étant déterminée de façon à éviter toute perturbation de la distribution uniforme établie par ledit dispositif de reprise.

Selon l'invention, la distance séparant la surface du dispositif de reprise de la partie inférieure des modules de capture est notamment fonction de la géométrie du flottateur, du débit traversant et de la température de l'eau brute à traiter.

Suivant un mode de réalisation préféré de la présente invention, cette distance est comprise entre 0,05 mètre et 1 mètre, de préférence entre 0,15 et 0,60 mètre.

On connaît des installations de flottation comportant des modules lamellaires. Ainsi, WO 97/20775 décrit un appareil de flottation comportant un plancher sur lequel sont disposés des modules lamellaires, afin d'augmenter la vitesse dans la cellule de flottation. Dans cette technique antérieure, il est nécessaire d'avoir une répartition homogène des ouvertures prévues dans le plancher et par ailleurs les modules lamellaires sont solidaires de ce plancher. En outre, dans WO 00/43320 on retrouve une disposition similaire, dans laquelle le plancher de la cellule de flottation qui est fixe ou tournant est solidaire des modules lamellaires. Ainsi qu'on l'a mentionné ci-dessus, dans EP-A-0 659 690, on met en oeuvre un dispositif de reprise, dans la cellule de flottation, dont les perforations sont réalisées et disposées de manière à réaliser une dissymétrie au niveau de ce dispositif de reprise, permettant d'obtenir un flux identique et uniforme de l'eau à traiter sur toute la surface de la cellule de flottation. La présente titulaire a constaté, d'une manière tout à fait inattendue pour l'homme de l'art, que ce flux identique et uniforme sur toute la surface de la cellule de flottation n'était pas perturbé par la présence de modules de capture à condition que ces derniers soient positionnés à une certaine distance du dispositif de reprise perforé.

D'autres caractéristiques et avantages de la présente invention ressortiront de la description faite ci-après en référence aux dessins annexés qui en illustrent des exemples de réalisation dépourvus de tout caractère limitatif. Sur les dessins :
La figure 1 est une vue schématique en coupe verticale longitudinale d'un équipement de flottation selon un exemple de réalisation de la présente invention, muni de modules lamellaires à flux parallèles ;
La figure 2 est une vue en plan de la figure 1 sur laquelle on n'a représenté qu'une moitié de la surface couverte par les modules ;
La figure 3 est une vue similaire à la figure 1 illustrant un autre exemple de réalisation de l'invention mettant en oeuvre des modules de transfert à flux croisés et
La figure 4 est une vue schématique illustrant le principe de fonctionnement d'un module de transfert à flux croisés mis en oeuvre dans le mode de réalisation illustré par la figure 3.

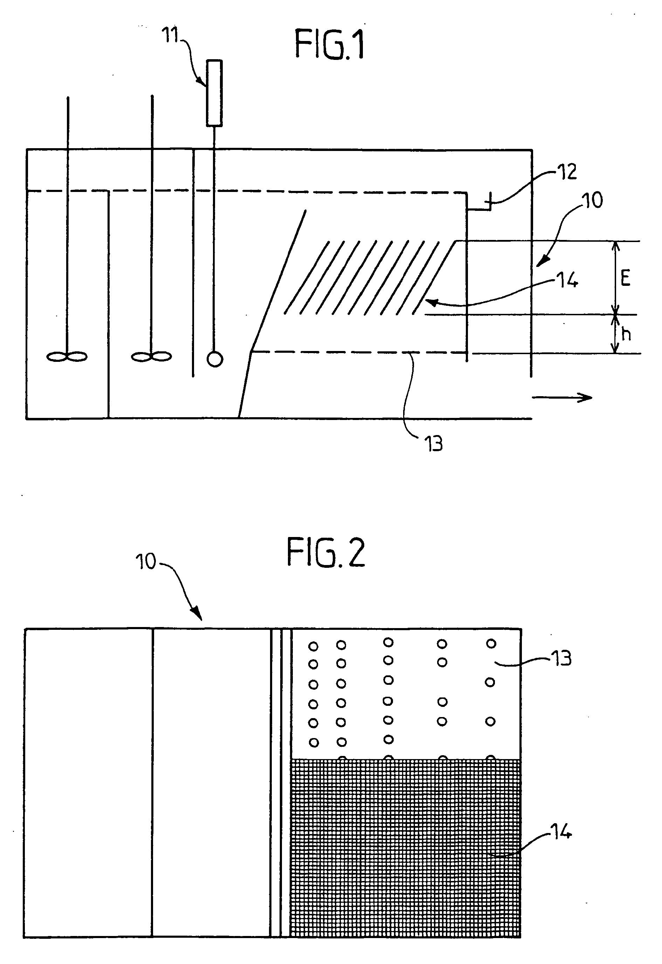

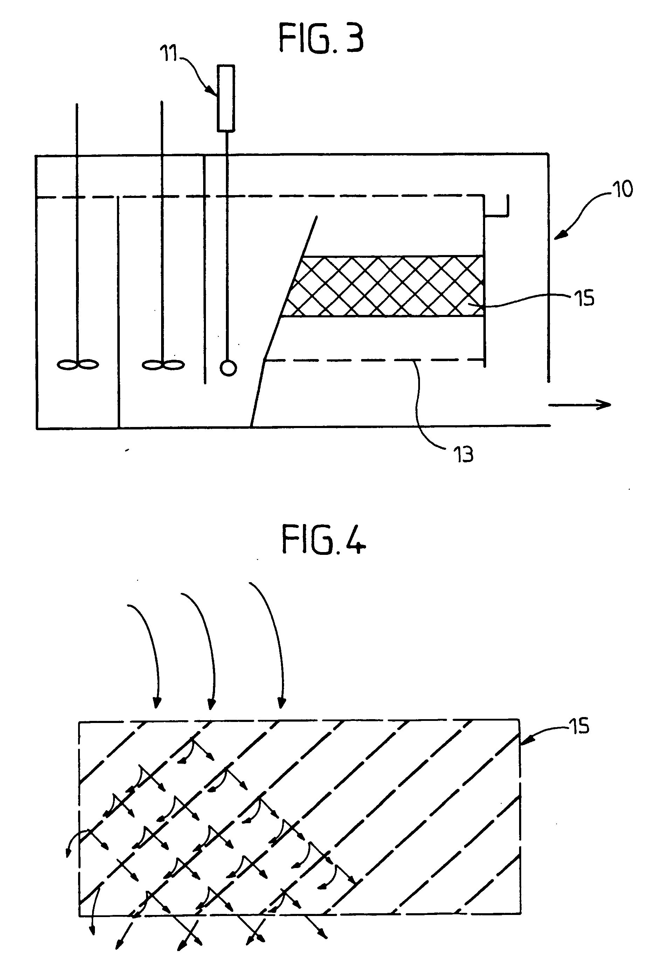

On se réfère en premier lieu aux figures 1 et 2 sur lesquelles on a représenté une cellule de flottation selon EP-A-0 659 690 et perfectionnée selon la présente invention.

Cette cellule de flottation, désignée dans son ensemble par la référence 10, reçoit l'eau brute mélangée avec de l'eau pressurisée délivrée par un système de pressurisation-détente schématisé en 11. Les matières en suspension, contenues dans l'eau brute et amenées en surface par les micro-bulles produites par le système de pressurisation-détente 11, sont évacuées à la partie supérieure de la cellule 10 par une goulotte 12. A sa partie inférieure la cellule comporte un système de reprise de l'eau traitée qui est constitué d'un dispositif de reprise 13, muni de perforations. Ainsi qu'on l'a mentionné ci-dessus, ces perforations, présentent des dimensions plus petites à l'extrémité finale de la cellule 10 qu'à son extrémité initiale, ou les intervalles séparant les perforations augmentent de l'extrémité initiale vers l'extrémité finale, cette disposition réalisant une dissymétrie au niveau du dispositif de reprise 13 qui assure un flux identique et uniforme sur toute la surface de la cellule de flottation.

Selon la présente invention, cette cellule est munie de moyens de capture qui sont disposés au-dessus du dispositif de reprise perforé 13 et dont la partie inférieure est située à une certaine distance de ce dispositif, cette distance étant déterminée de façon à éviter toute perturbation de la distribution uniforme de l'eau à traiter établie par le dispositif de reprise perforé.

Dans l'exemple de réalisation illustré par les figures 1 et 2, ces moyens de capture sont réalisés sous la forme de modules de capture 14, à lames ou à tubes parallèles, bien connus de l'homme de l'art. Par exemple, ces modules peuvent être du type décrits dans WO 97/20775 et présenter un profil tubulaire, hexagonal ou autre et une orientation, par exemple de 60° par rapport à l'horizontale. Ces modules de capture dirigent le flux à traiter dans un sens précis.

Sur la figure 2, on a représenté seulement une moitié de la surface couverte par les modules 14.

La distance h séparant la surface du dispositif de reprise 13 de la partie inférieure des modules de capture 14 est fonction notamment de la géométrie du flottateur, du débit traversant et de la température de l'eau à traiter. A titre d'exemple, on peut indiquer que cette distance peut être comprise entre 0,05 mètre et 1 mètre et de préférence entre 0,15 et 0,60 mètre.

La hauteur E (ou épaisseur) des modules 14 est choisie en fonction de la vitesse de fonctionnement et de la « surface projetée » des modules de capture. Cette hauteur peut varier entre 0,10 et 1 mètre, de préférence entre 0,2 et 0,70 mètre. En vue d'obtenir une coupure correcte, compte tenu des applications et des vitesses envisagées (de l'ordre de 20 m/h à 60 m/h) la surface projetée des modules (c'est-à-dire la surface active de la zone de capture encore appelée zone de séparation/accumulation), sera comprise entre 2 et 20 m2 par m2 de surface de flottateur équipée de modules.

Dans le mode de réalisation illustré par les figures 3 et 4, les moyens de capture sont réalisés sous la forme de modules de transfert 15, la réalisation étant par ailleurs identique à celle illustrée par les figures 1 et 2. De tels modules de transfert, généralement à flux non rectilignes, ont été représentés de façon schématique sur la figure 4. On peut notamment utiliser des modules « Brentwood CF » ou « Munters FB 10 », habituellement utilisés pour l'amélioration des transferts gaz-liquide, la séparation huiles/eau, etc ... Comme on le voit sur la figure 4, ils permettent de combiner deux sens de circulation de l'eau à traiter, ce qui augmente la turbulence dans les modules et favorise la coalescence des micro-bulles.

On a donné ci-après des exemples comparatifs de mise en oeuvre permettant de faire ressortir les avantages et effets techniques apportés par la présente invention, par rapport à l'état antérieur de la technique

### Exemple 1 .

On a réalisé des essais sur un équipement de traitement d'eaux brutes conforme à EP-A-0 659 690. Ces essais ont été réalisés à très grande vitesse (40 m3/m2.h), en eau froide c'est-à-dire à une température de 0,1 à 1,0°C. Lors de ces essais, on a constaté un entraînement significatif de bulles d'air à travers le dispositif de reprise de la cellule de flottation, ce qui est bien entendu indésirable. La quantité d'air entraînée avec l'eau traitée posait problème au niveau de la filtration ultérieure de cette eau dans un filtre sable/anthracite. La durée du cycle de filtration était très réduite en raison de la quantité élevée de bulles d'air, provoquant des embolies gazeuses dans le milieu filtrant, ce qui a pour effet d'augmenter la perte de charge du filtre et de diminuer ses performances.

La présence de bulles d'air dans l'eau traitée, dans la cellule de flottation, à très grande vitesse a également comme effet secondaire d'entraîner des matières solides en suspension, ce qui augmente la turbidité de l'eau traitée. Cette perte de performance de l'installation est également indésirable puisqu'une augmentation de la turbidité peut également entraîner une réduction du cycle de filtration, dans un filtre situé en aval.

En mettant en oeuvre cette installation connue, on a obtenu les performances résumées dans le tableau ci-après :

| Vitesse de flottation m3/h/m2 | Température de l'eau (°C) | Turbidité Sortie cellule NTU | Vitesse filtre m/h | Durée de filtration Heures |
|---|---|---|---|---|
| 40 | 0,2 | 2,5 | 10 | 12 |

Les résultats de ces essais ont confirmé que cette installation connue n'était pas appropriée au traitement d'eaux dans les conditions ci-dessus décrites.

### Exemple 2 :

Sur une eau de caractéristiques identiques, on a réalisé un autre essai avec la même installation selon EP-A-0 659 690, munie de modules lamellaires, constitués de plaques parallèles (présentant une hauteur de 30 cm et inclinées 60° par rapport à l'horizontale) et collés au dispositif de reprise de la cellule de flottation. Ces essais ont donné de très mauvais résultats, se traduisant par une augmentation notable de la turbidité de l'eau et de la densité des bulles d'air à la sortie de la cellule de flottation. On en a conclu que la présence d'un dispositif de reprise perforé, avec une distribution dissymétrique des trous de sortie d'eau, n'était pas compatible avec la mise en oeuvre de modules lamellaires de décantation dont la surface inférieure repose directement sur la surface de ce dispositif de reprise. Cette disposition ne permet pas d'obtenir un flux identique et uniforme sur toute la surface du bassin de flottation, cette caractéristique étant primordiale pour l'obtention d'une flottation efficace à grande vitesse. Ces essais ont révélé une diminution marquée de la qualité de l'eau.

Le tableau ci-après résume les résultats obtenus par la mise en oeuvre de cette installation.

| Vitesse de flottation m3/h/m2 | Température de l'eau (°C) | Turbidité Sortie cellule NTU | Vitesse filtre m/h | Durée de filtration Heures |
|---|---|---|---|---|
| 40 | 0,3 | 4,5 | 10 | 6 |

Les résultats de cet essai confirment que cette configuration d'installation n'est pas appropriée.

### Exemple 3 (invention) :

A nouveau dans les mêmes conditions de traitement et avec les mêmes caractéristiques d'eau, on a effectué des essais à l'aide de l'installation décrite dans l'exemple 2, la seule modification apportée consistant à positionner la partie inférieure des modules lamellaires à 30 cm au-dessus du dispositif de reprise, conformément aux figures 1 et 2. Les essais ont permis d'obtenir des résultats très supérieurs à ceux attendus. A la sortie des modules lamellaires, la concentration de bulles d'air dans l'eau a été fortement réduite grâce à la capture et à la coalescence de ces bulles sur les lamelles. Par ailleurs, une certaine quantité de matières en suspension a été capturée par les lamelles et les bulles coalescées.

On a ainsi obtenu, une diminution de la turbidité ainsi qu'une diminution de la quantité d'air entraînée. Les résultats obtenus lors de ces essais sont résumés dans le tableau ci-après :

| Vitesse de flottation m3/h/m2 | Température de l'eau (°C) | Turbidité Sortie cellule NTU | Vitesse filtre m/h | Durée de filtration Heures |
|---|---|---|---|---|
| 40 | 0,2 | 1,0 | 10 | 18 |

On notera que la turbidité de l'eau traitée est de 1 NTU, à comparer avec les valeurs de 2,5 et 4 NTU obtenues dans les exemples 1 et 2 ; de même, la durée de filtration (avant colmatage du filtre aval) est ici de 18 heures, au lieu de 12 et 6 heures dans les exemples 1 et 2.

### Exemple 4 (invention) :

On a effectué des essais à l'aide de l'installation décrite ci-dessus en référence aux figures 3 et 4, c'est-à-dire une installation dans laquelle la cellule de flottation est équipée de modules de transfert, dont la partie inférieure est située à 30 cm au-dessus du niveau du dispositif de reprise perforé. Ces essais ont donné d'excellents résultats : on a constaté une très grande diminution de la quantité d'air entraînée dans l'eau traitée, ce qui améliore notablement les performances de l'installation. Le tableau ci-après résume les résultats obtenus lors de ces essais :

| Vitesse de flottation m3/h/m2 | Température de l'eau (°C) | Turbidité Sortie cellule NTU | Vitesse filtre m/h | Durée de filtration Heures |
|---|---|---|---|---|
| 40 | 0,4 | 0,4 | 10 | 32 |

La lecture des tableaux correspondant aux exemples 3 et 4 confirme l'excellence des résultats obtenus par la mise en oeuvre de l'invention, par rapport aux installations selon l'état antérieur de l'art (exemples 1 et 2). Il convient de mentionner également que, dans le cadre des essais de l'exemple 4, on a pu réaliser des vitesses de traitement de l'ordre de 60 m3/h/m2 sans compromettre le niveau de turbidité de l'eau traitée, à la sortie de la cellule de flottation et en assurant un fonctionnement satisfaisant du filtre sable/anthracite disposé en aval de la cellule de flottation.

## Revendications

1. Installation de traitement d'eaux par flottation comportant un équipement de flottation constitué d'une cellule de flottation (10) dans laquelle est amenée de l'eau brute floculée et mélangée avec des micro-bulles produites par un système de pressurisation-détente (11), des modules de capture (14,15) étant disposés dans la cellule de flottation, laquelle est munie d'un dispositif de reprise (13) muni de perforations, **caractérisée en ce que** les perforations du dispositif de reprise (13) présentent des dimensions plus petites à l'extrémité finale de la cellule (10) qu'à son extrémité initiale, ou les intervalles séparant les perforations augmentent de l'extrémité initiale vers l'extrémité finale, cette disposition réalisant une dissymétrie au niveau du dispositif de reprise (13) qui assure un flux identique et uniforme sur toute la surface de la cellule de flottation, et **en ce que** les modules de capture sont disposés de manière que leur partie inférieure soit située à une distance (h) du dispositif de reprise perforé (13), cette distance étant déterminée de façon à éviter toute perturbation de la distribution uniforme établie par le dispositif de reprise perforé.

2. Installation selon la revendication 1, **caractérisée en ce que** la distance (h) séparant la surface du dispositif de reprise (13) de la partie inférieure des modules de capture (14,15) est notamment fonction de la géométrie du flottateur, du débit traversant et de la température de l'eau à traiter.

3. Installation selon l'une des revendications 1 ou 2, **caractérisée en ce que** la distance (h) séparant la surface du dispositif de reprise (13) de la partie inférieure des modules de capture (14,15) est comprise entre 0,05 mètre et 1 mètre, de préférence entre 0,15 et 0,60 mètre.

4. Installation selon l'une quelconque des revendications précédentes **caractérisée en ce que** la hauteur ou épaisseur (E) des modules de capture (14,15) est déterminée en fonction de la vitesse de fonctionnement et de la surface projetée desdits modules de capture.

5. Installation selon la revendication 4, **caractérisée en ce que** ladite hauteur ou épaisseur (E) est comprise entre 0,10 et 1 mètre, de préférence entre 0,2 et 0,70 mètre.

6. Installation selon l'une quelconque des revendications précédentes, **caractérisée en ce que** la surface projetée des modules de capture, c'est-à-dire la surface active de la zone de séparation/accumulation, est comprise entre 2 et 20 m2 par m2 de surface de flottateur équipée de modules.

7. Installation selon l'une quelconque des revendications précédentes, **caractérisée en ce que** les modules de capture sont du type lamellaire, notamment à plaques parallèles (14), à profil tubulaire ou hexagonal, à flux directs ou croisés.

8. Installation selon l'une quelconque des revendications 1 à 6, **caractérisée en ce que** les modules de capture sont du type modules de transfert(15), en général à flux non rectiligne et assurant deux sens de circulation de l'eau à traiter.

## Claims

1. Installation for treating water by flotation, comprising flotation equipment consisting of a flotation cell (10) into which the flocculated untreated water is brought and mixed with microbubbles produced by a pressurisation/depressurisation system (11), capture modules (14, 15) being disposed in the flotation cell, which is provided with a collection device (13) provided with perforations, **characterised in that** the perforations in the collection device (13) have smaller dimensions at the final end of the cell (10) than at its initial end, or the intervals separating the perforations increase from the initial end towards the final end, this arrangement producing an asymmetry at the collection device (13) that provides an identical uniform flow over the entire surface of the flotation cell, and **in that** the capture modules are disposed so that their bottom parts are situated at a distance (h) from the perforated collection device (13), this distance being determined so as to prevent any disturbance to the uniform distribution established by the perforated collection device.

2. Installation according to claim 1, **characterised in that** the distance (h) separating the surface of the collection device (13) from the bottom parts of the capture modules (14, 15) is in particular a function of the geometry of the flotation equipment, the through flow rate and the temperature of the water to be treated.

3. Installation according to one of claims 1 or 2, **characterised in that** the distance (h) separating the surface of the collection device (13) from the bottom parts of the capture modules (14, 15) is between 0.05 metre and 1 metre, preferably between 0.14 and 0.60 metre.

4. Installation according to any one of the preceding claims, **characterised in that** the height or thickness (E) of the capture modules (14, 15) is determined according to the speed of operation and the projected surface of the said capture modules.

5. Installation according to claim 4, **characterised in that** the said height or thickness (E) is between 0.10 and 1 metre, preferably between 0.2 and 0.70 metre.

6. Installation according to any one of the preceding claims, **characterised in that** the projected surface of the capture modules, that is to say the active surface of the separation/accumulation zone, is between 2 and 20 m² per m² of flotation equipment surface equipped with modules.

7. Installation according to any one of the preceding claims, **characterised in that** the capture modules are of the lamellar type, in particular with parallel plates (14), with a tubular or hexagonal profile, with direct or cross flows.

8. Installation according to any one of claims 1 to 6, **characterised in that** the capture modules are of the transfer module type (15), in particular with a non-rectilinear flow and providing two directions of circulation of the water to be treated.

## Patentansprüche

1. Anlage für die Wasserbehandlung durch Flotation, mit einer durch eine Flotationszelle (10) gebildeten Flotationseinrichtung, in die ausgeflocktes und mit durch ein Druckbeaufschlagungs-Entspannungs-System (11) erzeugten Mikroblasen vermischtes, unbehandeltes Wasser eingebracht wird, wobei Auffangmodule (14, 15) in der Flotationszelle angeordnet sind, die mit einer perforierten Aufnehmeinrichtung (13) ausgestattet ist, **dadurch gekennzeichnet, dass** die Abmessungen der Perforationen der Aufnehmeinrichtung (13) am Ende der Zelle (10) kleiner als an deren Anfang sind oder die die Perforationen trennenden Abstände sich vom Anfang zum Ende vergrößern, wobei durch diese Anordnung in der Aufnehmeinrichtung (13) eine Asymmetrie erzeugt wird, die über die gesamte Oberfläche der Flotationszelle einen identischen und einheitlichen Fluß sicherstellt, und dass die Auffangmodule derart angeordnet sind, dass ihr unterer Abschnitt sich in einem Abstand (h) von der perforierten Aufnehmeinrichtung (13) befindet, wobei der Abstand derart bestimmt ist, dass jede Störung der durch die perforierte Aufnehmeinrichtung erzeugten einheitlichen Verteilung vermieden wird.

2. Anlage nach Anspruch 1, **dadurch gekennzeichnet, dass** der die Oberfläche der Aufnehmeinrichtung (13) von dem unteren Abschnitt der Auffangmodule (14, 15) trennende Abstand (h) namentlich von der Geometrie der Flotationseinrichtung, dem Durchfluß und der Temperatur des zu behandelnden Wasser abhängig ist.

3. Anlage nach Anspruch 1 oder 2, **dadurch gekennzeichnet, dass** der die Oberfläche der Aufnehmeinrichtung (13) von dem unteren Abschnitt der Auffangmodule (14, 15) trennende Abstand (h) zwischen 0,05 Meter und 1 Meter, vorzugsweise zwischen 0,15 und 0,60 Meter beträgt.

4. Anlage nach einem der vorangehenden Ansprüche, **dadurch gekennzeichnet, dass** die Höhe oder Dicke (E) der Auffangmodule (14, 15) in Abhängigkeit von der Betriebsgeschwindigkeit und der projizierten Oberfläche der Auffangmodule bestimmt ist.

5. Anlage nach Anspruch 4, **dadurch gekennzeichnet, dass** die Höhe oder Dicke (E) zwischen 0,10 Meter und 1 Meter, vorzugsweise zwischen 0,2 und 0,7 Meter beträgt.

6. Vorrichtung nach einem der vorangehenden Ansprüche, **dadurch gekennzeichnet, dass** die projizierte Oberfläche der Auffangmodule, d.h. die aktive Oberfläche der Trennungs-/Ansammlungszone zwischen 2 und 20 m² pro m² an Oberfläche der mit Modulen ausgerüsteten Flotationseinrichtung beträgt.

7. Vorrichtung nach einem der vorangehenden Ansprüche, **dadurch gekennzeichnet, dass** die Auffangmodule lamellenartig ausgebildet sind, insbesondere mit parallelen Platten (14), mit röhrenförmigem oder sechseckigem Profil, mit direktem oder gekreuztem Fluß.

8. Anlage nach einem der Ansprüche 1 bis 6, **dadurch gekennzeichnet, dass** die Auffangmodule als Umlenkmodule (15) mit allgemein ungeradlinigem Fluß ausgebildet sind und zwei Zirkulationsrichtungen des zu behandelnden Wasser hervorrufen.
